# EUROPÄISCHE PATENTSCHRIFT

(11) **EP 2 789 808 B1**
(45) Veröffentlichungstag und Bekanntmachung des Hinweises auf die Patenterteilung: **23.12.2015**
(21) Anmeldenummer: 13195346.5
(22) Anmeldetag: 22.03.2012
(51) Int. Cl.: F01D 25/08, F02C 3/34, F02C 6/18, F02C 7/04, F02C 7/143, F01K 17/02

(54) **Gasturbinenkraftwerk mit Abgasrezirkulation und sauerstoffarmen Kühlgas**
Gas turbine power plant with waste gas recirculation and cooling gas with low oxygen content
Centrale de turbine à gaz dotée d'une circulation des gaz d'échappement et d'un gaz de refroidissement pauvre en oxygène

(30) Priorität: 22.03.2011 CH 4822011
(43) Veröffentlichungstag der Anmeldung: 15.10.2014
(62) Teilanmeldung aus: 12160676.8
(73) Patentinhaber: ALSTOM Technology Ltd, 5400 Baden (CH)
(72) Erfinder: Hellat, Jaan, 8126 Zumikon (CH); Rofka, Stefan, 5415 Nussbaumen (CH); Hoevel, Michael, 5426 Lengnau (CH); Benz, Eribert, 5413 Birmenstorf (CH); Burdet, Andre, 1752 Villars sur Glane (CH); Sander, Frank, 33605 Bielefeld, NRW (DE); Guethe, Felix, 4056 Basel (CH)
(74) Vertreter: Pesce, Michele

(56) Entgegenhaltungen:
- EP-A1- 1 621 741
- EP-A2- 0 887 530
- EP-A2- 2 208 876
- DE-A1-102008 002 870

## Beschreibung

### TECHNISCHES GEBIET

Die vorliegende Erfindung betrifft ein Verfahren zum Betrieb eines Gasturbinenkraftwerkes mit Abgasrezirkulation in dem ein sauerstoffarmes Gas zur Kühlung der Heissgasteile benutzt wird sowie ein Gasturbinenkraftwerk mit Abgasrezirkulation.

### STAND DER TECHNIK

Die Rezirkulation von Abgasen ist eine Technologie, welche grundsätzlich für unterschiedlichste Zwecke bei Gasturbinen eingesetzt werden kann. So beispielsweise für die Kontrolle der Emissionen, für die Reduktion des Abgasvolumens für die Kohlendioxid-Abscheidung etc. Bei der Rezirkulation von Abgasen bei einer Gasturbine wird ein wesentlicher Anteil des Abgases aus dem gesamten Abgasstrom abgezweigt und wird normalerweise, nach Kühlung und Reinigung, dem Eingangsmassenstrom der Turbine respektive dem Kompressor der Turbine wieder zugeführt, wobei der rückgeführte Abgasstrom mit frischer Luft aus der Umgebung vermischt wird, und diese Mischung anschliessend dem Kompressor zugeführt wird.

Vorteilhaft kann durch Abgasrezirkulation der Kohlendioxid- Partialdruck in den Abgasen erhöht werden, um die Leistungsverluste und Wirkungsgradverluste von Kraftwerken mit Kohlendioxid-Abscheidung zu reduzieren. Weiter ist Abgasrezirkulation mit dem Ziel vorgeschlagen worden, den Sauerstoffgehalt in den Ansauggasen von Gasturbinen zu reduzieren, um dadurch die NOx-Emissionen zu reduzieren.

Zur Abgasrezirkulation beschreibt beispielsweise die US 7536252 B1 ein Verfahren zum Steuern eines Abgasrezirkulationsstroms einer Turbomaschine, der über ein Abgasrezirkulationssystem zu dem Einlass der Turbomaschine zurückgeführt wird. Bei diesem Verfahren wird ein Soll-Abgasrezirkulationsanteil bestimmt, der den Anteil des Abgasstroms an dem Eintrittsstrom der Turbomaschine beinhaltet, und der Ist-Wert auf den Soll- Wert eingestellt wird.

Aus der EP2248999 ist ein Kraftwerk mit Abgasrezirkulation sowie ein Verfahren zum Betrieb eines derartigen Kraftwerks bekannt, indem lastabhängig die Rezirkulationsrate und die Temperatur auf die die rezirkulierten Abgase rückgekühlt werden geregelt wird.

Typischerweise ist es vorteilhaft eine möglichst hohe Rezirkulationsrate zu erzielen. Die Rezirkulationsrate wird typischerweise durch die Anforderungen der Brennkammer begrenzt, da sonst der Sauerstoffgehalt der Brenngase zu tief wird und eine vollständige, CO und UHC (unburned hydrocarbon) freie Verbrennung nicht gewährleistet werden kann.

Im Stand der Technik wird, um bei niedrigem Sauerstoffgehalt der Brenngase eine gute Verbrennung zu gewährleisten, die Frischluft mit den rezirkulierten Abgasen möglichst gut vermischt, um bei Brennkammereintritt ein homogenes Gasgemisch zur Verfügung zu stellen. Ein zur druckverlustarmen Vermischung von Frischluft mit rezirkulierten Abgasen geeigneter Mischer ist beispielsweise aus der WO2010/142573 A2 bekannt.

Trotz Zuführung eines homogenen Gasgemisches ist der Restsauerstoffgehalt der Abgase einer derartigen Anlage noch relativ hoch, da bei herkömmlichen Gasturbinen sauerstoffhaltige Gase durch das Kühlluftsystem an die Brennkammer vorbeigeführt wird und in der Turbine oder in der Brennkammer als Kühlluft zugeführt wird, ohne dass der darin enthaltende Sauerstoff zur Verbrennung genutzt werden kann.

Aus der EP 2 208 876 A2 ist ein Gasturbinenkraftwerk mit Abgasrezirkulation bekannt, in dem ein erster Verdichter Luft verdichtet und einer Brennkammer zuführt und ein zweiter Verdichter rezirkuliertes Abgas verdichtet und der Brennkammer zuführt.

### DARSTELLUNG DER ERFINDUNG

Der vorliegenden Erfindung ist die Aufgabe gestellt, eine Gasturbine für ein Verfahren zum zuverlässigen Betrieb eines Gasturbinenkraftwerkes mit Abgasrezirkulation und einem offenen Kühlsystem für Heissgasteile anzugeben, bei dem der Restsauerstoff der Abgase minimiert wird.

Erfindungsgemäss wird diese Aufgabe durch den Gegenstand des unabhängigen Anspruchs gelöst. Der Kern der Erfindung ist eine Gasturbine für ein Verfahren, bei welchem in einem offenen Kühlsystem für Heissgasteile der Gasturbine sauerstoffarmes Gas verwendet wird. Als sauerstoffarmes Gas wird dabei ein Gas bezeichnet, welches eine Sauerstoffkonzentration hat, die kleiner als die mittlere Sauerstoffkonzentration des Verdichteransaugstroms ist.

Ein Gasturbinenkraftwerk zur Durchführung eines Verfahrens mit Abgasrezirkulation ist Gegenstand der Erfindung. Ein derartiges Kraftwerk umfasse eine Gasturbine mit Verdichtereinlass, einen Abhitzedampferzeuger und einen Abgasteiler, der die Abgase in einen ersten Abgasstrom zur Rezirkulation in einen Ansaugstrom der Gasturbine und in einen zweiten Abgasstrom zur Abgabe an die Umgebung teilt. Gemäss der Erfindung ist der Verdichtereinlass in Sektoren aufgeteilt, die am Verdichtereintritt an in den Strömungskanal des Verdichters münden, wobei eine Zuführung für Frischluft durch einen ersten Sektor des Verdichtereinlasses führt und eine Zuführung für den ersten Abgasstrom durch einen zweiten Sektor des Verdichtereinlasses führt.

In einer Ausführungsform des Gasturbinenkraftwerks sind der erste Sektor und der zweite Sektor des Verdichtereinlasses beim Anschluss an den Strömungskanal des Verdichters als konzentrische Kreisringe ausgeführt. In diese Sektoren werden die beiden Gasströme möglichst homogen verteilt. Von diesen Sektoren des Verdichtereinlasses treten beide Gasströme möglichst ohne Vermischung und mit homogener Geschwindigkeit in den Verdichter ein.

In einer weiteren Ausführungsform des Gasturbinenkraftwerks ist das Flächenverhältnis der Anschlussfläche des ersten Sektors des Verdichtereinlasses an den Strömungskanal des Verdichter zu der Anschlussfläche des zweiten Sektors des Verdichtereinlasses an den Strömungskanal des Verdichter so gewählt, dass es bei Auslegungsbedingungen der Gasturbine gleich dem Verhältnis der Volumenströme von angesaugter Frischluft zu dem rezirkulierten erstem Abgasstrom ist.

In einer Ausführungsform des Gasturbinenkraftwerks ist eine Vielzahl von Zuführungskanälen zur Einleitung des ersten Abgasstroms in den Verdichter in dem Verdichtereinlass auf einem Kreis konzentrisch zur Achse der Gasturbine in Umfangsrichtung verteilt.

In einer weitern Ausführungsform des Gasturbinenkraftwerks ist ein Regelelement vorgesehen, welches eine kontrollierte Zumischung von Frischluft in den rezirkulierten ersten Abgasstrom erlaubt. Dies Regelelement, zu dem Umgebungsluft über eine Leitung oder einen Luftkanal zugeführt wird, ist beispielsweise eine Klappe oder ein Ventil. Um die Druckverluste des Regelelements und der Zuführung sowie der Zumischung zu kompensieren, kann ein Gebläse in der Zuleitung vorgesehen sein.

Um im Verdichter eine bessere Trennung der Ansaugluft von den rezirkulierten Abgasen zu realisieren wird der erste Abgasstrom bevorzugt auf dem äusseren Durchmesser des Verdichtereinlasses einführt und die Frischluft auf dem inneren Durchmesser, da die Dichte der rezirkulierten Abgase aufgrund des CO2 Gehaltes höher als die von Luft ist. Der Dichteunterschied führt im Verdichter aufgrund der Radialkomponente der Strömungsgeschwindigkeit und der damit resultierenden höheren volumenspezifischen Zentrifugalkräfte des Abgases zu einer Schichtung im Verdichter bzw. reduziert die Vermischung von rezirkulierten Abgasstrom und Frischluft im Verdichter.

Typischerweise wird ein Grossteil der Kühlluft einer Gasturbine über Verdichterentnahmestellen von der Aussenwand des Verdichtergehäuses abgezweigt. Werden bei einer derartigen Gasturbine die rezirkulierten Abgase auf dem äusseren Durchmesser des Verdichtereinlasses zugeführt und eine Vermischung mit Frischluft vermieden, werden die rezirkulierten CO2 reichen Abgase im Verdichter entnommen und an der Brennkammer als Kühlgas vorbeigeführt während ein sauerstoffreicher Strom im Verdichter bleibt und vom Verdichteraustritt der Brennkammer zugeführt wird.

Um die Vermischung von erstem Abgasstrom und Frischluft im Verdichter zu reduzieren, wird weiter eine Verdichterschaufel mit Trennbandsegment für eine Gasturbine mit Abgasrezirkulation vorgeschlagen. Diese Verdichterschaufel umfast einen Schaufelfuss und ein Schaufelblatt, wobei zwischen Schaufelfuss und dem freien, dem Schaufelfuss abgewandten Ende des Schaufelblatts, ein Trennbandsegment angeordnet ist. Dies Trennbandsegment bildet typischerweise einen rechten Winkel zur Längsachse der Schaufel. In der normalen Einbauposition bilden die Trennbandsegmente aller Schaufeln einer Verdichterstufe einen im wesentlichen geschlossenen, senkrecht zur Achse der Gasturbine liegenden Kreisring und hemmen im Verdichter eine Vermischung des rezirkulierten ersten Abgasstroms mit Frischluft.

Trennbandsegmente können auf Leit- und auf Laufschaufeln vorgesehen sein. Aufgrund der resultierenden erhöhten Zentrifugalkräfte sind in einer Ausführungsform Trennbandsegmente nur auf den Leitschaufeln vorgesehen.

In einer weiteren Ausführungsform werden bei mindestens einer Verdichterstufe Trennbandsegmente nur auf den Laufschaufeln vorgesehen und keine Trennbandsegmente auf den Leitschaufeln vorgesehen. Dies kann beispielsweise bei verstellbaren Leitschaufeln vorteilhaft sein, da die Trennbandsegmente der Leitschaufeln bei einem Verstellen der Leitschaufelposition ineinander laufen würden, oder falls sie, um eine Verstellbarkeit zu gewährleisten, gekürzt oder gerundet ausgeführt sind, die aerodynamischen Eigenschaften der Stufe negativ beeinflussen.

In einer weiteren Ausführungsform sind die Trennbandsegmente nur bis zur ersten oder bis zur zweiten Verdichterentnahmestelle vorgesehen, da bis dort effektiv, verdichtete sehr sauerstoffarme rezirkulierte Abgase aus dem Verdichter entnommen werden können.

Alle erläuterten Vorteile sind nicht nur in den jeweils angegebenen Kombinationen, sondern auch in anderen Kombinationen oder Alleinstellung verwendbar, ohne den Rahmen der Erfindung zu verlassen. Beispielsweise kann anstelle der Verwendung eines Abgasgebläses ein Booster vorgesehen werden.

Die Erfindung ist ohne Einschränkung für Gasturbinen mit einer Brennkammer sowie für Gasturbinen mit sequentieller Verbrennung, wie sie beispielsweise aus der EP0718470 bekannt sind, anwendbar.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Darstellung eines Gasturbinenkraftwerks mit Rückführung der Abgase nach Stand der Technik;
- Fig. 2: eine schematische Darstellung eines Gasturbinenkraftwerks mit Rückführung der Abgase und koaxialer Einleitung von Abgasen und Frischluft in den Verdichter,
- Fig. 3: eine schematische Darstellung eines geteilten Verdichtereinlasses und Verdichters eines Gasturbinenkraftwerks mit Rückführung der Abgase;
- Fig. 4: eine schematische Darstellung eines Ausschnitts aus Verdichtereinlass und Verdichter einer Gasturbine mit Rückführung der Abgase und Trennbandsegmenten an Verdichterleit- und Verdichterlaufschaufeln;
- Fig. 5: eine schematische Darstellung eines Verdichtereinlass und Verdichters eines Gasturbinenkraftwerks mit Rückführung der Abgase über eine Vielzahl von kreisförmig um die Gasturbinenachse im Verdichtereinlass angeordneten Zuführungskanälen (39),
- Fig. 6: eine schematische Darstellung eines Gasturbinenkraftwerks mit Dampfkühlung.

### WEGE ZUR AUSFÜHRUNG DER ERFINDUNG

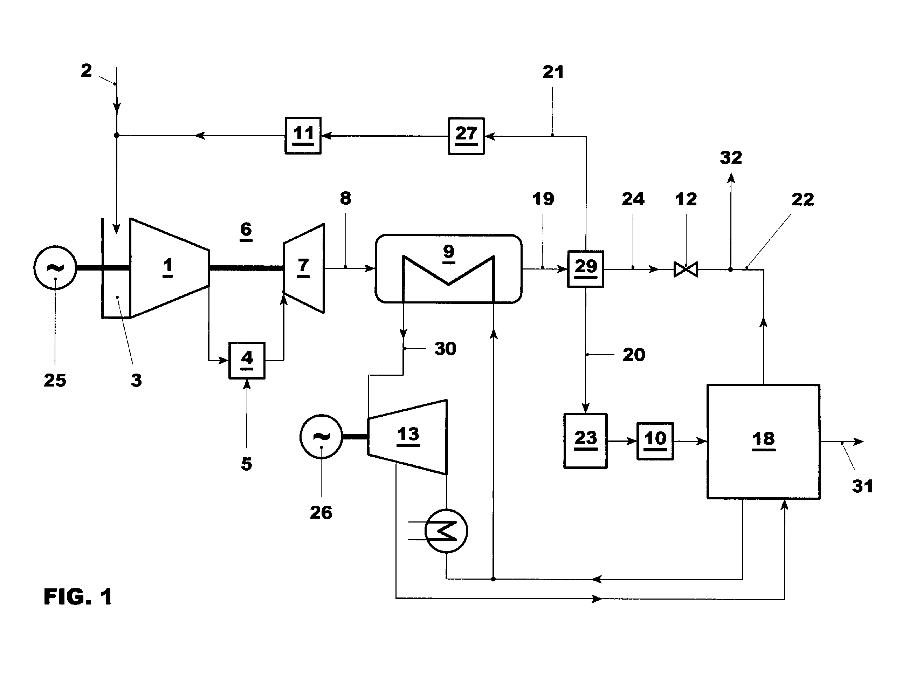

Fig. 1 zeigt in schematischer Darstellung die wesentlichen Elemente eines Gasturbinenkraftwerks. Die Gasturbine 6 umfasst einen Verdichter 1 (Kompressor), die darin verdichtete Verbrennungsluft wird einer Brennkammer 4 zugeführt und dort mit Brennstoff 5 verbrannt. Anschliessend werden die heissen Verbrennungsgase in einer Turbine 7 entspannt. Die in der Turbine 7 erzeugte Nutzenergie wird dann zum Beispiel mit einem auf der gleichen Welle angeordneten ersten Generator 25 in elektrische Energie umgewandelt.

Die aus der Turbine 7 austretenden heissen Abgase 8 werden zur optimalen Nutzung der darin noch enthaltenen Energie in einem Abhitzedampferzeuger 9 (Heat recovery steam generator, HRSG) dazu verwendet, Frischdampf 30 für eine Dampfturbine 13 oder für andere Anlagen zu erzeugen. Die in der Dampfturbine 13 erzeugte Nutzenergie wird dann zum Beispiel mit einem auf der gleichen Welle angeordneten zweiten Generator 26 in elektrische Energie umgewandelt. Der Wasserdampfkreislauf ist in dem Beispiel vereinfacht und nur schematisch dargestellt. Verschiedene Druckstufen, Speisewasserpumpen usw. werden nicht gezeigt, da diese nicht Gegenstand der Erfindung sind.

Ein Teil der Abgase vom Abhitzedampferzeuger 19 wird bei einer solchen Anlage hinter dem Abhitzedampferzeuger 9 in einem Strömungsteiler 29, welcher geregelt sein kann, in einen ersten Abgasteilstrom 21 und einen zweiten Abgasteilstrom 20 geteilt. Der erste Abgasteilstrom 21 wird in die Ansaugleitung der Gasturbine 6 zurückgeführt und dort mit Frischluft 2 vermischt. Der nicht zurückgeführte zweite Abgasteilstrom 20 wird typischerweise in einem Abgasrückkühler 23 weiter gekühlt und einem CO2-Abscheidsystem 18 zugeführt. Von diesem werden CO2- arme Abgase 22 über einen Kamin 32 an die Umgebung abgegeben. Um die Druckverluste des CO2-Abscheidsystems 18 und der Abgasleitung zu überwinden kann ein Abgasgebläse 10 vorgesehen sein. Das in dem CO2-Abscheidsystem 18 abgeschiedene CO2 31 wird typischerweise komprimiert und zur Lagerung oder weiteren Behandlung abgeleitet. Das CO2-Abscheidsystem 18 wird über eine Dampfextraktion mit aus der Dampfturbine 13 abgezweigtem Dampf versorgt.

Der zweite Abgasteilstrom kann auch direkt über einen Abgasbypass 24 zu dem Kamin 32 geführt werden.

Der zurückgeführte Abgasstrom 21 wird in einem Abgasrückkühler 27, welcher mit Kondensator ausgestattet sein kann, auf etwas über Umgebungstemperatur abgekühlt. Stromab dieses Abgasrückkühlers 27 kann ein Booster oder Abgasgebläse 11 für den Rezirkulationsstrom 21 angeordnet sein. Dieser zurückgeführte Abgasstrom 21 wird mit der Frischluft 2 vermischt, bevor das Gemisch als Ansaugstrom über den VerdichterEinlass 3 der Gasturbine 6 zugeführt wird.

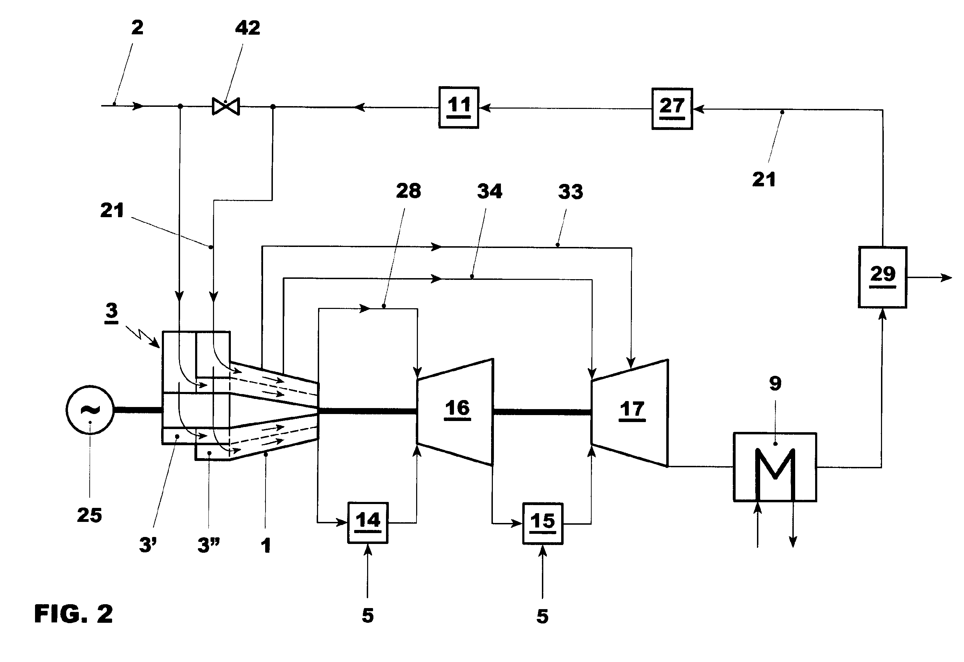

Im Gegensatz zu Fig. 1 ist in Fig. 2 eine Gasturbine mit sequentieller Verbrennung dargestellt. Das Verfahren ist für Gasturbinen mit einer Brennkammer sowie für Gasturbinen mit sequentieller Verbrennung anwendbar. Entsprechend sind auch Ausführungen für Gasturbinen mit einer Brennkammer auszuführen.

Fig. 2 zeigt schematisch ein Ausführungsbeispiel eines Gasturbinenkraftwerks mit einem Verdichtereinlass, der in zwei Sektoren aufgeteilt ist, wobei eine Zuführung für Frischluft in einem Frischlufteinlasssektor 3' des Verdichtereinlasses 3 mündet und eine Zuführung für Abgasstrom 21 in den ersten Abgaseinlasssektor 3" des Verdichtereinlasses 3 mündet. Die beiden Einlasssektoren 3', 3" schliessen auf der dem Kompressor zugewandten Seite des Verdichtereinlasses 3 unmittelbar an den Strömungskanal des Verdichters 1 an. Der Frischlufteinlasssektor 3' mündet dabei an eine innere Ringfläche des Strömungskanals und der Abgaseinlasssektor 3" an eine äussere Ringfläche des Strömungskanals

Von der radialen Aussenwand des Verdichters 1 wird Nieder- und Mitteldruck- Kühlgas 33, 34 abgezweigt und den Heissgasteilen der Gasturbine zur Kühlung zugeführt. Weiter wird am Ende des Verdichters von der radialen Aussenwand des Verdichters oder des anschliessenden Diffusors Hochdruck- Kühlgas 28 abgezweigt und den Heissgasteilen der Gasturbine zur Kühlung zugeführt. In den Fig. 2 ist vereinfachend nur eine Kühlgaszuführung zu der Hochdruckturbine 16 und zur Niederdruckturbine 17 dargestellt. Vereinfachend ist eine Kühlgaszuführung zu den Brennkammern 14, 15 nicht dargestellt, wobei die Hochdruckbrennkammer 14 typischerweise mit Hochdruckkühlluft 28 gekühlt wird und die Niederdruckbrennkammer 15 typischerweise mit Mitteldruckkühlluft 34 gekühlt wird. Da die rezirkulierten Abgase in den Aussenbereich des Verdichters geleitet werden, werden diese zu einem grossen Teil als Kühlgas 33, 34, 28 um die Brennkammern 14, 15 herumgeführt, während die sauerstoffreiche Frischluft im Kernbereich des Verdichters 1 bis zum Verdichterende verdichtet wird und in die Hochdruckbrennkammer 14 gelangt. Durch die Trennung der Gaszuführung im Einlass 3 wird ein grosser Anteil an sauerstoffreiche Frischluft in die Brennkammer 14 geleitet. Somit ist auch der Sauerstoffanteil in den Eintrittsgasen der Niederdruckbrennkammer 15 deutlich gegenüber einer Anlage erhöht, bei der die rezirkulierten Abgase 21 mit Frischluft 2 vermischt werden.

Um bei verschiedenen Betriebszuständen der Gasturbine und den damit verbunden Änderungen des Anteils an rezirkuliertem Abgas 21 and der Verdichteransaugmenge eine homogenes Geschwindigkeitsprofil in der Zuströmung zu dem Verdichter zu realisieren, ist in dem in Fig. 2 gezeigten Ausführungsbeispiel ein Regelelement vorgesehen, über das dem ersten Abgasstrom 21 Frischluft 2 zugemischt wird, bevor diese über den zweiten Sektor des Verdichtereinlasses 3" in den Verdichter 1 eingeleitet wird.

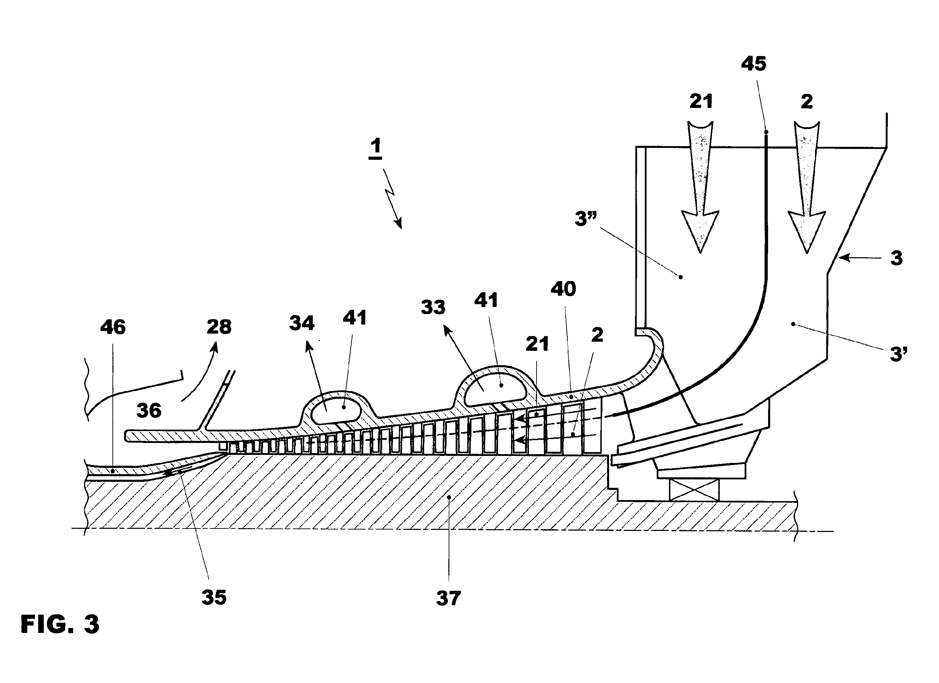

Fig. 3 zeigt schematisch ein Ausführungsbeispiel eines geteilten Verdichtereinlasses und Verdichters eines Gasturbinenkraftwerks mit Rückführung der Abgase. In dem gezeigten Beispiel ist der Verdichtereinlass 3 durch ein Einlassleitblech 45 in einen äusseren Verdichtereinlasssektor für Frischluft 3' und einen Verdichtereinlasssektor für rezirkuliertes Abgase 3" geteilt. Diese Teilung des Verdichtereinlasses 3 führt zu einer im wesentlichen koaxialen Einströmung von rezirkuliertem Abgas 21 und Frischluft in den Verdichter 1. In dem gezeigten Beispiel wird die Frischluft 2 durch einen innen, an den Rotor 37 angrenzenden Ringraum im Verdichter 1 verdichtet. Die rezirkulierten Abgase 21 werden in einen aussen an das Verdichtergehäuse 40 angrenzenden Ringraum im Verdichter 1 verdichtet. In dem gezeigten Beispiel wird an zwei stellen des Verdichters 1 Gas für das Sekundärgassystem der Gasturbine 6 über Verdichterentnahmestellen 41 abgezweigt. Das Sekundärgas wird typischerweise zur Kühlung von Heissgasteilen verwendet und je nach Design ausserdem beispielsweise im Lagerbereich als Spül- oder Sperrluft verwendet. Aus der ersten Entnahmestelle 41 wird Niederdruckkühlgas 33 abgezweigt und aus der zweiten Entnahmestelle 41 wird Mitteldruckkühlgas 34 abgezweigt. Aus dem Verdichterplenum 36 wird Hochdruckkühlgas 28 abgezweigt.

In dem gezeigten Beispiel wird ausserdem am Ende des Verdichters 1 zwischen einer Wellenabdeckung 46 und Rotor 37 Rotorkühlgas 35 abgezweigt. Um den Frischluftanteil der Rotorkühlluft 35 zu reduzieren, ist in einem weiteren Ausführungsbeispiel (nicht gezeigt) der Verdichtereinlass in 3 koaxiale Sektoren geteilt: je einen äusseren und einen inneren zur Einleitung von rezirkulierten 21 Gasen und einem Mittleren zur Einleitung von Frischluft 2.

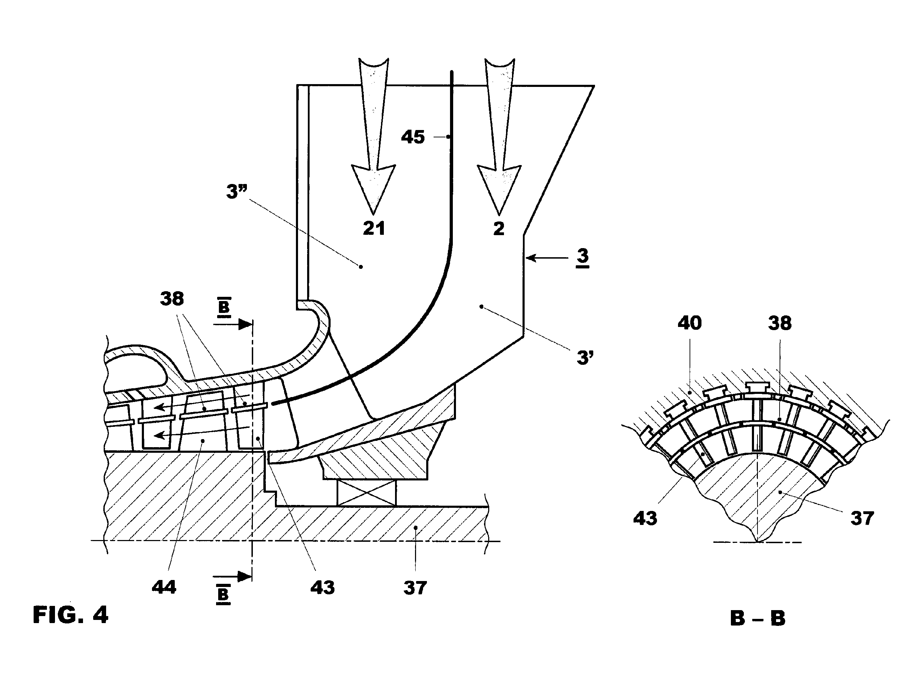

Auch bei einer koaxialen Zuführung von Frischluft 2 und rezirkulierten Abgas 21 kommt es aufgrund von Sekundärströmungen im Verdichter 1 zu einer Vermischung von Frischluft 2 und rezirkulierten Abgas 21. Dies kann den positiven Effekt der separaten Zuführung von Frischluft 2 und rezirkulierten Abgas 21 im Verdichtereinlass reduzieren. Um diese Vermischung im Verdichter 1 zu minimieren ist ein Verdichter mit Schaufeln mit Trennbandsegmente vorgeschlagen. In Fig. 4 ist ein Ausführungsbeispiel gezeigt, in dem alle Verdichterleitschaufeln 43 und alle Verdichterlaufschaufeln 44 mit Trennbandsegmenten 38 ausgeführt sind, die sich im zusammengebauten Zustand bei jeder Stufe zu einem zusammenhängenden Trennband zusammenfügen.

Im Schnitt B-B ist am Beispiel der ersten Verdichterstufe eine Ausführung eines Trennbadens gezeigt. In dem Beispiel ist bei jeder Laufschaufel bei etwa 50% der Höhe des Schaufelblattes ein Trennbandsegment 38 angeordnet, dass sich im Wesentlichen senkrecht zum Schaufelblatt in Radialrichtung erstreckt.

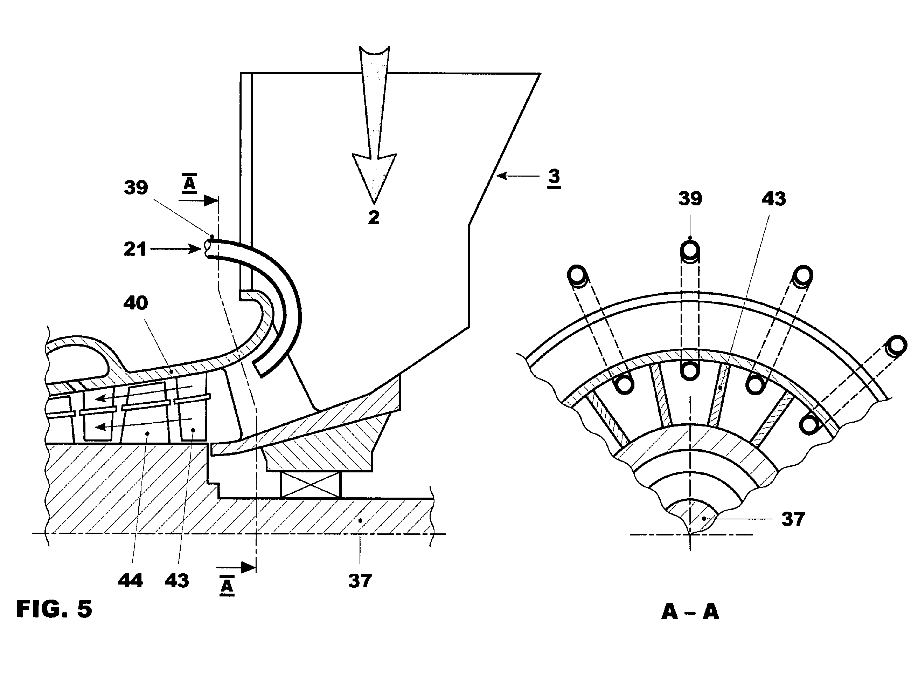

Fig. 5 zeigt eine alternative Zuführung der rezirkulierten Abgase 21. Anstelle einer separaten Zuführung der rezirkulierten Abgase 21 über einen Verdichtereinlasssektor für rezirkulierte Abgase 3" wird ein ungeteilter Verdichtereinlass 3 benutzt, in den die rezirkulierten Abgase 21 über eine Vielzahl von kranzförmig an der Aussenwand des Einlasskanals 3 anordneten Einlasskanälen 39 eingeleitet werden. Als Einlasskanal 39 eignen sich beispielsweise Rohrenden oder Rohrstutzen, deren Austrittsende parallel zur Hauptströmung in Richtung Verdichtereintritt ausgerichtet sind. In dem gezeigten Beispiel reichen die Rohrstutzen bis in die Einlaufdüse (Bellmouth) des Verdichters 1 hinein, um eine Vermischung mit Frischluft 2 zu minimieren.

Die Rohrstutzen können auch noch im eigentlichen Verdichtereinlass enden oder schon an der Wand des Verdichtereinlasses enden. Bevorzugt sollten die Enden ringförmig um die Achse der Gasturbine angeordnet sein.

Die Ausführung mit einer Vielzahl von Einlasskanälen 39 hat den Vorteil, dass kein Einlassleitblech 45 zur Trennung des Verdichtereinlasses 3 benötigt wird. Dies hat im Betrieb den Vorteil, dass das Verhältnis von Frischluft zu rezirkuliertem Abgas bei unabhängig von dem Flächenverhältnis der Einlasssektoren geändert werden kann.

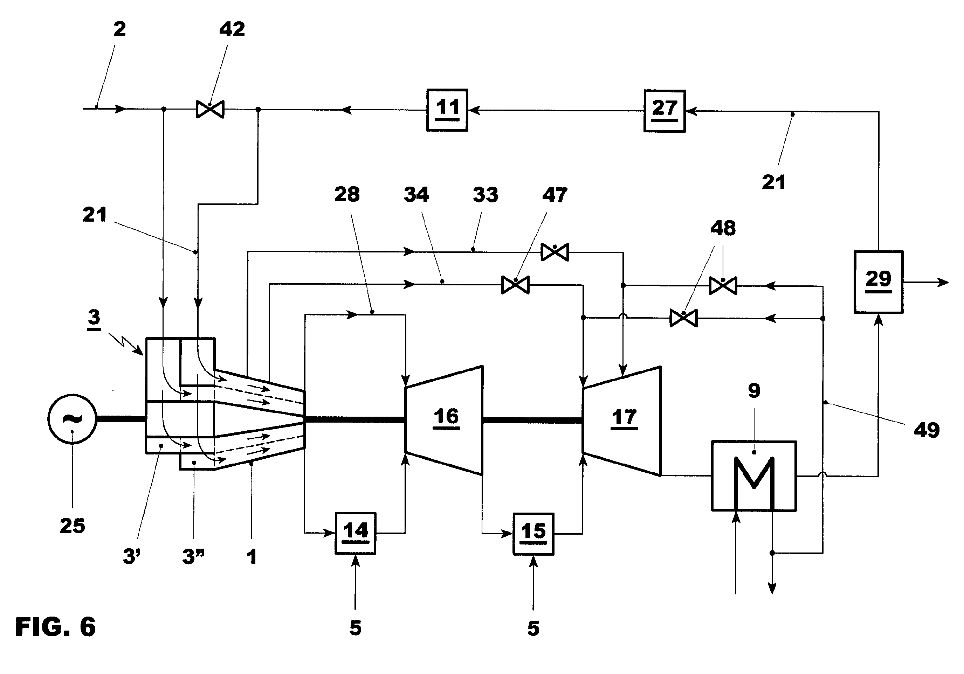

Fig. 6 basierend auf Fig. 2 und zeigt schematisch ein Ausführungsbeispiel bei dem zusätzlich die Einspeisung von Dampf in das Kühlsystem möglich ist. Dafür geht von dem Wasserdamedampfkreislauf eine Dampfleitung 49 ab, die in dem Kühlgassystem der Gasturbine mündet. In dem gezeigten Beispiel ist eine Dampfleitung 49 dargestellt, die in den Leitungen für zur Speisung des Nieder- und Mitteldruck- Kühlgassystems 33 sowie des Hochdruckkühlgassystems 34 verzweigt ist. Alternativ kann auch Dampf mit verschiedenen Druckniveaus aus dem Wasser- Dampfkreislauf oder alternativen Quellen genutzt werden und an die Kühlgasleitungen der Gasturbine mit entsprechenden Druckniveaus eingeleitet werden.

Um zwischen Kühlung mit Dampf oder Verdichterkühlgas bzw. einer Kombination aus beiden kühlen zu können, sind in den Leitungen für Nieder- und Mitteldruck- Kühlgas 34 Kühlgasventile 47 sowie in Dampfleitungen 49 Dampfventile 48 vorgesehen. Wenn die Kühlgasventile 47 geöffnet sind und die Dampfventile 48 geschlossen sind, kann beispielsweise beim Start oder Betrieb mit tiefer Teillast der Gasturbine das Kühlgassystem herkömmlich mit Kühlgas aus dem Verdichter 1 arbeiten. Sobald genügend Dampf verfügbar ist, können die Kühlgasventile 47 geschlossen werden und die Dampfventile 48 geöffnet werden, um eine Dampfkühlung durchzuführen. Die Dampfkühlung kann die Kühlgaskühlung ganz oder teilweise ersetzen. Die Dampfkühlung kann in Kombination mit der in Fig. 6 dargestellten koaxialen Einleitung von rezirkuliertem ersten Abgasteilstrom 21 und Frischluft 2 in den Verdichter 1 realisiert werden oder in Kombination mit einer konventionellen Vermischung von Frischluft 2 und rezirkuliertem ersten Abgasteilstrom 21 vor dem Verdichter 1 realisiert werden (entsprechend Fig. 1; hier nicht dargestellt).

### BEZUGSZEICHENLISTE

- 1: Verdichter
- 2: Frischluft
- 3: Verdichtereinlass
- 3': erster Sektor: Verdichtereinlasssektor für Frischluft
- 3": zweiter Sektor: Verdichtereinlasssektor für rezirkulierte Abgase
- 4: Brennkammer
- 5: Brennstoff
- 6: Gasturbine
- 7: Turbine
- 8: Heisse Abgase der Gasturbine
- 9: Abhitzedampferzeuger (heat recovery steam generator, HRSG)
- 10: Abgasgebläse für den zweiten partiellen Abgasstrom (zum CO2-Abscheidesystem)
- 11: Abgasgebläse für den ersten Abgasteilstrom (Abgasrezirkulation)
- 12: Bypassklappe oder Ventil
- 13: Dampfturbine
- 14: Hochdruckbrennkammer
- 15: Niederdruckbrennkammer
- 16: Hochdruckturbine
- 17: Niederdruckturbine
- 18: C02-Abscheidesystem
- 19: Abgas vom Abhitzedampferzeuger
- 20: Zweiter Abgasteilstrom (Abgasleitung zum CO2-Abscheidesystem)
- 21: Erster Abgasteilstrom (Abgasrezirkulation)
- 22: CO2-armes Abgas
- 23: Abgasrückkühler (für den zweiten Abgasteilstrom)
- 24: Abgasbypass zum Kamin
- 25: Erster Generator
- 26: Zweite Generator
- 27: Abgasrückkühler (für den ersten Abgasteilstrom)
- 28: Hochdruck- Kühlgas
- 29: Abgasteiler
- 30: Frischdampf
- 31: Abgeschiedenes CO2
- 32: Kamin
- 33: Niederdruck- Kühlgas
- 34: Mitteldruck- Kühlgas
- 35: Rotorkühlgas
- 36: Verdichterplenum
- 37: Rotor
- 38: Trennbandsegment
- 39: Zuführungskanal
- 40: Verdichtergehäuse
- 41: Verdichterentnahmestelle
- 42: Frischluft- Regelelement
- 43: Verdichterleitschaufel
- 44: Verdichterlaufschaufel
- 45: Einlassleitblech
- 46: Wellenabdeckung
- 47: Kühlgasventil
- 48: Dampfventil
- 49: Dampfleitung

## Patentansprüche

1. Gasturbinenkraftwerk mit Abgasrezirkulation, welches eine Gasturbine (6) mit einem Regler, einem Abhitzedampferzeuger (9), einen Verdichtereinlass (3) durch den ein Ansaugstrom in einen Verdichter der Gasturbine einströmt und einen Abgasteiler (29), der die Abgase (19) in einen ersten Abgasstrom (21) zur Rezirkulation in einen Ansaugstrom der Gasturbine (6) und in einen zweiten Abgasstrom (20) zur Abgabe an die Umgebung teilt, umfasst,
wobei der Verdichtereinlass in Sektoren (3', 3") aufgeteilt ist, an die der Strömungskanal des Verdichters anschliesst, wobei eine Zuführung für Frischluft durch einen ersten Sektor (3') des Verdichtereinlasses führt und eine Zuführung für den ersten Abgasstrom (21) durch einen zweiten Sektor (3") des Verdichtereinlasses führt, **dadurch gekennzeichnet, dass** der erste Sektor (3') und der zweite Sektor (3") durch ein Einlassleitblech (45) geteilt sind, und dass der erste Sektor (3') und der zweite Sektor (3") des Verdichtereinlasses beim Anschluss an den Strömungskanal des Verdichters (1) als konzentrische Kreisringe ausgeführt sind.

2. Gasturbinenkraftwerk nach Anspruch 1, **dadurch gekennzeichnet, dass** das Flächenverhältnis der Anschlussfläche des ersten Sektors (3') an den Strömungskanal des Verdichters zu Anschlussfläche des zweiten Sektors (3") an den Strömungskanal des Verdichter gleich dem Verhältnis der Volumenströme von zugeführter Frischluft zu dem ersten Abgasstrom (21) bei Auslegungsbedingungen der Gasturbine (6) gewählt ist.

3. Gasturbinenkraftwerk mit Abgasrezirkulation, welches eine Gasturbine (6) mit einem Regler, einem Abhitzedampferzeuger (9), einen Verdichtereinlass (3) durch den ein Ansaugstrom in einen Verdichter der Gasturbine einströmt und einen Abgasteiler (29), der die Abgase (19) in einen ersten Abgasstrom (21) zur Rezirkulation in einen Ansaugstrom der Gasturbine (6) und in einen zweiten Abgasstrom (20) zur Abgabe an die Umgebung teilt, umfasst,
wobei der Verdichtereinlass in Sektoren (3', 3") aufgeteilt ist, an die der Strömungskanal des Verdichters anschliesst, wobei eine Zuführung für Frischluft durch einen ersten Sektor (3') des Verdichtereinlasses führt und eine Zuführung für den ersten Abgasstrom (21) durch einen zweiten Sektor (3") des Verdichtereinlasses führt, **dadurch gekennzeichnet, dass** eine Vielzahl von Zuführungskanälen (39) zur Einleitung des ersten Abgasstroms (21) in den Verdichter in dem Verdichtereinlass auf einem Kreis konzentrisch zur Achse der Gasturbine in Umfangsrichtung verteilt angeordnet ist.

4. Gasturbinenkraftwerk nach einem der Ansprüche 1 bis 3, **dadurch gekennzeichnet, dass**, um eine Vermischung von Gasen des rezirkulierten ersten Abgasstroms (21) mit Frischluft im Verdichter (1) zu hemmen, Trennbandsegmente (38) an Verdichterleitschaufen (43) und/ oder Verdichterlaufschaufeln (44) angeordnet sind.

5. Gasturbinenkraftwerk nach einem der Ansprüche 1 bis 4, **dadurch gekennzeichnet, dass** es ein Regelelement (42) umfasst, welches eine kontrollierte Zumischung von Frischluft in den rezirkulierten ersten Abgasstrom (21) erlaubt.

## Claims

1. Gas turbine power plant with flue gas recirculation, which comprises a gas turbine (6) with a governor, a heat recovery steam generator (9), a compressor intake (3) through which an inlet flow enters a compressor of the gas turbine, and a flue gas splitter (29) which splits the flue gases (19) into a first flue gas flow (21) for recirculation into an inlet flow of the gas turbine (6) and into a second flue gas flow (20) for discharging to the environment,
wherein the compressor intake is split into sectors (3', 3") to which is connected the flow passage of the compressor, wherein a feed for fresh air leads through a first sector (3') of the compressor intake and a feed for the first flue gas flow (21) leads through a second sector (3") of the compressor intake, **characterized in that** the first sector (3') and the second sector (3") are divided by means of an intake baffle plate (45), and **in that** the first sector (3') and the second sector (3") of the compressor intake are constructed as concentric annuluses at the connection to the flow passage of the compressor (1).

2. Gas turbine power plant according to Claim 1, **characterized in that** the area ratio of the connecting area of the first sector (3') to the flow passage of the compressor to the connecting area of the second sector (3") to the flow passage of the compressor is selected to be equal to the ratio of the volumetric flows of supplied fresh air to the first flue gas flow (21) during design conditions of the gas turbine (6).

3. Gas turbine power plant with flue gas recirculation, which comprises a gas turbine (6) with a governor, a heat recovery steam generator (9), a compressor intake (3) through which an inlet flow enters a compressor of the gas turbine, and an flue gas splitter (29) which splits the flue gases (19) into a first flue gas flow (21) for recirculation into an inlet flow of the gas turbine (6) and into a second flue gas flow (20) for discharging to the environment,
wherein the compressor intake is split into sectors (3', 3") to which is connected the flow passage of the compressor, wherein a feed for fresh air leads through a first sector (3') of the compressor intake and a feed for the first flue gas flow (21) leads through a second sector (3") of the compressor intake, **characterized in that** a multiplicity of feed passages (39) for introducing the first flue gas flow (21) into the compressor are arranged in the compressor intake in a circumferentially distributed manner on a circle which is concentric to the axis of the gas turbine.

4. Gas turbine power plant according to one of Claims 1 to 3, **characterized in that** in order to block mixing of gases of the recirculated first flue gas flow (21) with fresh air in the compressor (1), separating band segments (38) are arranged on compressor stator blades (43) and/or compressor rotor blades (44).

5. Gas turbine power plant according to one of Claims 1 to 4, **characterized in that** it comprises a control element (42) which allows a controlled adding of fresh air to the recirculated first flue gas flow (21).

## Revendications

1. Centrale de turbine à gaz dotée d'une recirculation de gaz d'échappement, qui comprend une turbine à gaz (6) avec un régulateur, un générateur de vapeur à chaleur perdue (9), une entrée de compresseur (3) à travers laquelle afflue un courant d'aspiration dans un compresseur de la turbine à gaz, et un diviseur de gaz d'échappement (29) qui divise les gaz d'échappement (19) en un premier courant de gaz d'échappement (21) en vue de la recirculation dans un courant d'aspiration de la turbine à gaz (6) et en un deuxième courant de gaz d'échappement (20) destiné à être évacué vers l'environnement, l'entrée de compresseur étant divisée en secteurs (3', 3") au niveau desquels se raccorde le conduit d'écoulement du compresseur, une alimentation en air frais conduisant à travers un premier secteur (3') de l'entrée de compresseur et une alimentation en le premier courant de gaz d'échappement (21) conduisant à travers un deuxième secteur (3") de l'entrée de compresseur, **caractérisée en ce que** le premier secteur (3') et le deuxième secteur (3") sont divisés par une tôle directrice d'entrée (45) et **en ce que** le premier secteur (3') et le deuxième secteur (3") de l'entrée de compresseur sont réalisés sous forme de bagues circulaires concentriques lors du raccordement au conduit d'écoulement du compresseur (1).

2. Centrale de turbine à gaz selon la revendication 1, **caractérisée en ce que** le rapport de surface de la surface de raccordement du premier secteur (3') au niveau du conduit d'écoulement du compresseur, à la surface de raccordement du deuxième secteur (3') au niveau du conduit d'écoulement du compresseur, est choisi égal au rapport des débits volumiques de l'air frais acheminé, au premier courant de gaz d'échappement (21), dans des conditions de conception de la turbine à gaz (6).

3. Centrale de turbine à gaz dotée d'une recirculation de gaz d'échappement, qui comprend une turbine à gaz (6) avec un régulateur, un générateur de vapeur à chaleur perdue (9), une entrée de compresseur (3) à travers laquelle afflue un courant d'aspiration dans un compresseur de la turbine à gaz, et un diviseur de gaz d'échappement (29) qui divise les gaz d'échappement (19) en un premier courant de gaz d'échappement (21) en vue de la recirculation dans un courant d'aspiration de la turbine à gaz (6) et en un deuxième courant de gaz d'échappement (20) destiné à être évacué vers l'environnement, l'entrée de compresseur étant divisée en secteurs (3', 3") au niveau desquels se raccorde le conduit d'écoulement du compresseur, une alimentation en air frais conduisant à travers un premier secteur (3') de l'entrée de compresseur et une alimentation en le premier courant de gaz d'échappement (21) conduisant à travers un deuxième secteur (3") de l'entrée de compresseur, **caractérisée en ce qu'**une pluralité de conduits d'alimentation (39) pour introduire le premier courant de gaz d'échappement (21) dans le compresseur est disposée de manière répartie dans la direction périphérique dans l'entrée de compresseur sur un cercle concentrique par rapport à l'axe de la turbine à gaz.

4. Centrale de turbine à gaz selon l'une quelconque des revendications 1 à 3, **caractérisée en ce que** pour empêcher un mélange de gaz du premier courant de gaz d'échappement recirculé (21) avec l'air frais dans le compresseur (1), des segments de bandes de séparation (38) sont disposés au niveau des aubes directrices du compresseur (43) et/ou au niveau des aubes mobiles du compresseur (44).

5. Centrale de turbine à gaz selon l'une quelconque des revendications 1 à 4, **caractérisée en ce qu'**elle comprend un élément de régulation (42) qui permet un mélange contrôlé d'air frais dans le premier courant de gaz d'échappement recirculé (21) .
